# EUROPEAN PATENT APPLICATION

(11) **EP 4 191 284 A1**
(43) Date of publication of application: **07.06.2023**
(21) Application number: 21849486.2
(22) Date of filing: 21.06.2021
(51) Int. Cl.: G01S 17/89, G06T 7/00

(54) **SYSTEM AND METHOD FOR INFRASTRUCTURE INSPECTION**

(30) Priority: 31.07.2020 ES 202030822
(71) Applicant: Arborea Intellbird S.L., 37185 Villamayor (Salamanca) (ES)
(72) Inventor: BERNABEU GONZALEZ, Carlos José, 37185 Villamayor (ES)
(86) International application number: PCT/ES2021/070457
(87) International publication number: WO 2022/023594

(57) **Abstract**

Disclosed is a system and method for infrastructure inspection, comprising means for generating a 3D model of a specific piece of infrastructure, such as a LIDAR or photogrammetric sensor on board a helicopter or UAV, the model acting as a basis for creating a waypoint sequence according to which a route will be programmed, which will later be followed by vehicles for inspecting the piece of infrastructure. The vehicles are preferably multi-rotor UAVs that carry out their inspection by gathering data without a LIDAR sensor and which, when performing their programmed route, will be able to dispense with complex on-board electronic processing equipment, all of which results in greater flight autonomy.

## Description

### Field of the invention

This invention refers to a system and a method for infrastructure inspection using a three-dimensional model of a piece of infrastructure from which an inspection route is obtained, the vehicles for inspecting said piece of infrastructure being programmed according to said route.

### Background art

Industrial infrastructure failures pose high risks and can cause accidents or important damages for their proprietor (oil leakages, power cuts), making it advisable to anticipate such failures or to detect them at an early stage, by way of routine inspections. In certain industrial fields these inspections are compulsory.

Regarding linear infrastructures, such as pipelines, railway lines or power lines, to which the present invention is preferably applied, inspection methods are known comprising a step of acquiring images and their further processing.

WO 2007/010473 (CONSIGLIO NAZIONALE DELLE RICHERCHE), 25/01/2007, "Automatic method and system for visual inspection of railway infrastructure", specifically refers to railway lines and it is aimed at detecting the absence of specific components of the line, such as rail-fastening pieces. To this end, image sequences of infrastructure portions are captured, its geographical coordinates are established and sub-images are created corresponding to the position which, according to pre-existing information, those components occupy. Further, the sub-images are processed to determine the presence or absence of said components.

EP1548908 (UNION FENOSA DISTRIBUCION, SA), 29/06/2005, "Method and device for inspecting linear infrastructure" describes a device installed in a mobile phone which is employed to capture images on board a helicopter. The means to capture images are automatically or semiautomatically oriented towards the infrastructure, based on infrastructure spatial position data which are stored in the system.

The use of helicopters to capture data in linear infrastructure inspections is common nowadays, but it poses important problems, due to its high cost, especially in medium voltage power lines, and because its human crew is exposed to accidents. For these reasons, the trend is towards the use of unmanned vehicles, operated by a remote pilot or flying according to an automatic preprogrammed route. These can be land vehicles (UGV, Unmanned Ground Vehicle), aquatic (ROUV, Remotely Operated Underwater Vehicle), o aerial (UAV, Unmanned Aerial Vehicle, commonly known as drones).

The most suitable unmanned vehicles to capture data in infrastructure, in lieu of conventional helicopters, are UAV, and specifically multirotor UAV (having arms provided with propellers), due to their stationary flight capacity. Multirotor UAV present multiple advantages over crewed helicopters, such as their lower cost, reduced operational logistics, rapid deployment capacity and absence of personal risks.

However, to capture data in an element of a piece of infrastructure using a UAV, the element concerned must be precisely located on a preestablished path (which may have been obtained by scanning the piece of infrastructure) plus the aircraft must be positioned at the appropriate distance to direct its sensors towards the element concerned. This requires real-time on-board processing of the data furnished by the UAV's recognition sensors (LiDAR, devices for on-board vision processing). Data acquired by UAV may be, for instance, video images to which artificial vision is applied, or point clouds obtained by a LiDAR device. Said devices and operations consume a lot of energy, substantially reducing flight autonomy, and mean a high payload that also affects flight autonomy. These setbacks are preventing UAVs to compete favourably, especially in some linear infrastructure inspection tasks, with helicopters, which have more flight autonomy and payload capacity.

The subject matter of the present patent is a system and a method for infrastructure inspection, aimed at optimizing data acquisition, said inspections being carried out by an unmanned vehicle, preferably a UAV. Using as a basis a 3D model of a piece of infrastructure, an inspection route is configured. The precise points on which the vehicle must be positioned along the route and the data which must be acquired in respect of them are determined (a precision which is obtainable because a 3D point cloud is used as basis). Automatic and precise positioning of a UAV, at a distance an angle that an expert in the art would consider optimal with respect to the inspected element is essential to carry out a fast data acquisition. The more efficient and fast data acquisition is, the less energy the UAV will require and therefore the higher its autonomy to perform inspections over longer distances. Besides, by programming its inspection route according to said positioning points, the vehicle will automatically follow the route, not requiring electronic devices for on-board processing of complex data, thus saving weight and consumption and increasing its autonomy.

### Summary of the invention

The subject matter of the present invention is a system and a method for infrastructure inspection. Infrastructure must be understood as any human construction, be it for population's use (residential buildings, bridges, roads, railway lines) or for different ends, such as energy production (windmills) or transportation (oil pipelines, gas pipelines, power lines, which for these purposes will be called linear infrastructures, on which this invention is preferably implemented).

The proposed method must be implemented on a specific infrastructure because the method takes into consideration its specific location and spatial design. Therefore, the result obtained will only be valid for that infrastructure, in the understanding that the invention is susceptible of industrial application because it can be implemented on any infrastructure. As will be deduced from the following explanation, the invention is useful when successive inspection operations are to be carried out in respect of the same piece of infrastructure, (for instance, as part of a routine maintenance program), rather than performing a specific inspection due to a single event, such as a fire or a collapse.

The method for infrastructure inspection comprises means to generate a structural digital model of a piece of infrastructure, means to configure an inspection route and at least an inspection vehicle.

The means to generate a structural digital model of a piece of infrastructure will result in a three-dimensional representation of the piece of infrastructure and its surrounding area.

In a preferred embodiment, these means comprise at least a LiDAR (Light Detection And Ranging) sensor. This type of sensors features a laser beam emitter and makes it possible to determine the distance from said emitter to an object or surface, using a pulse laser light beam. LiDAR sensors scan a surface generating a dense point cloud, with a vertical elevation accuracy which is currently of 2-3 centimetres. Other known means of generating a structural model of a piece of infrastructure are photogrammetric sensors or cameras, by taking overlapping aerial pictures and processing them to obtain a point cloud. Three-dimensional models of the scanned area can be generated by any of these means, for instance, a three-dimensional model of a gas pipeline or power line.

To scan the piece of infrastructure, the means to generate a structural model will typically be on board a vehicle, either guided by a pilot or programmed to perform an automatic route along the infrastructure extension. This vehicle will be preferably an aerial vehicle, for instance a conventional helicopter or a UAV. Nevertheless, there are other ways to operate the scanning sensors, even by a person carrying them and operating them manually. The different vehicles and ways of operation may be combined along the piece of infrastructure.

Once the piece of infrastructure has been scanned, its digital structural model can be obtained by any conventional means. The scanning, particularly in the case of a linear infrastructure, will presumably require a considerable effort, with the advantage that, thanks to the additional components of the system and method of this patent, the results of such effort will be utilized for successive automatic inspections over that same piece of infrastructure.

The invention proceeds from an obvious fact: the spatial location of a piece of infrastructure is always the same. Therefore, a point-cloud-based three-dimensional model of that piece of infrastructure can be taken as basis to configure an inspection route, which will always be the same because the object which has been taken as a reference to configure the route is always the same and the critical points for positioning the vehicle and the obstacles to be cleared will always be the same.

Secondly, the system comprises means to configure at least one inspection route. Said means comprise a computer program for obtaining a sequence of spatial positioning points, known as waypoints. A waypoint is a set of coordinates that identify a specific point is space according to its three dimensions (longitude, latitude, altitude). Programming waypoints from georeferenced images is known in the state of the art, those images including point clouds, for instance a point cloud obtained by digitally scanning a piece of infrastructure. Proceeding from a point cloud allows programming waypoints with a centimetric precision between points located in a three-dimensional space.

Finally, the inspection system comprises at least an inspection vehicle. Suitable vehicles to this end are any remote-control vehicles known in the art (UGV, ROV UAV) or that could be developed. According to the invention, several vehicles may be utilized simultaneously or successively for the task of inspecting a piece of infrastructure, for instance, a UAV swarm, each UAV programmed to cover a portion of the infrastructure extension.

The at least one inspection vehicle does not carry a LiDAR sensor on board, because its mission is not to scan the piece of infrastructure under inspection. Likewise, the inspection vehicle will not require either a system to process vision on board, or a LiDAR sensor, because the vehicle will follow a preconfigured route, plus the specific points where data (for instance, taking pictures in critical points of the infrastructure) need to be acquired have been programmed and the acquired data will be processed back in the ground. All this saves energy, resulting in a higher operational autonomy. The inspection vehicle features a basic obstacle-detection sensor, allowing it to change course to avoid an obstacle and return to the programmed route, in the hypothetical situation that, between the time when the scanning operation was performed and the time where specific inspection work is carried out, an unforeseeable obstacle has appeared, for instance, the branches of a tree have grown. This last sensor does not require associated components for complex on board processing, thus saving energy.

The system that comprises the means that have been described is characterized, as defined in claim 1, in that the means to configure an inspection route are configured to calculate stopping points for at least an inspection vehicle in points of the point cloud associated to critical elements of the piece of infrastructure; to convert the stopping points in a sequence of spatial positioning points; to program at least one data-acquisition action on each of the at least one inspection vehicle's stopping points and to configure an inspection route by linking the sequence of spatial positioning points.

On a second aspect, the subject matter of the invention is a method for infrastructure inspection which is implemented by the described system.

The method comprises, in a first step, generating a structural model of a specific infrastructure, which is performed by utilizing the means which have been described above.

In a second step, the method comprises configuring an inspection route.

In a third step, the method comprises programming at least an inspection vehicle to follow an inspection route along all or part of the piece of infrastructure. This inspection route can be repeated when required, from the basis of the route obtained in the second step.

In a fourth step, the data acquired by the at least one inspection vehicle is processed.

The method comprising the four described steps is characterized in that, according to claim 5, the step that comprises configuring an inspection route in turn comprises the substeps of calculating stopping points for the at least one inspection vehicle in points of the point cloud associated to critical elements of the piece of infrastructure; converting the stopping points in a sequence of spatial positioning points; programming at least one data-acquisition action on each of the at least one inspection vehicle's stopping points and configuring an inspection route by linking the sequence of spatial positioning points.

### Description of embodiments

In a first aspect, the subject matter of the present invention is a system for infrastructure inspection, referring to a specific piece of infrastructure, with a unique physical location. In a preferred embodiment, the invention is applied to a linear piece of infrastructure, such as a power line. The piece of infrastructure has points that, for inspection purposes, are considered critical because they are prone to defects or structural failures.

The system comprises means to generate a structural digital model of the piece of infrastructure. In a preferred embodiment, these means comprise, firstly, a LiDAR sensor. In another embodiment, said means comprise a photogrammetric sensor, or a set of such sensors. Sensors of one or the other type are preferably installed on board an aircraft, which can be a conventional helicopter or a UAV, or both, each scanning the piece of infrastructure by covering different portions of it. The result of said scanning with any of these means will be a high-density cloud point.

The means to generate a structural digital model of the piece of infrastructure comprise, secondly, a computer software for the treatment of the point cloud which was obtained by scanning the piece of infrastructure, said treatment being for the purposes of generating the structural model, specifically a three-dimensional rendering. Any of the known programs may be used to this end.

The system for infrastructure inspection likewise comprises means to configure an inspection route. In a preferred embodiment, said means comprise a computer program which is utilized in connection with the following functions: detecting the scanned infrastructure, for which purpose the point cloud is taken as a basis; calculating the inspection vehicle's stopping points at critical elements of the infrastructure, converting the stopping points in a sequence of spatial positioning points or waypoints, setting specific data acquisition actions associated to those waypoints and linking the waypoints in a route programmable to an inspection vehicle.

Finally, the system for infrastructure inspection comprises an inspection vehicle, preferably a multirotor UAV. The UAV is equipped with a satellite positioning system capable of connecting to several satellite networks, such as GPS, GLONASS, BeiDou or GALILEO. Likewise, the UAV features a basic obstacle-detection and avoidance sensor. Additionally, the UAV has a high precision positioning system, for instance a RTK (Real-Time Kinematics)-type system.

In a second aspect, the subject matter of the invention is a method for infrastructure inspection which is implemented by the described system.

The method comprises, in a first step, generating a structural digital model of a specific infrastructure, which preferably consists of generating a 3D model of the infrastructure.

This first step comprises a first substep of scanning the infrastructure; a second substep of generating a point cloud and a third substep of computer-processing the point cloud, to obtain the mentioned structural digital model of the piece of infrastructure.

In a second step, the method comprises configuring an inspection route. This step is preferably carried out with the personal intervention of an operator, who uses the computer program comprised in the means to configure an inspection route, as has been mentioned above.

This second step comprises a first substep of detecting the infrastructure, for which purpose the point cloud is taken as a basis. A second substep consists of calculating stopping points for the inspection vehicle in points of the point cloud associated to critical elements of the piece of infrastructure. A third substep consists of converting the stopping points in a sequence of spatial positioning points or waypoints; a fourth substep consists of programming at least one data-acquisition action (for instance, taking pictures) on each of the inspection vehicle's stopping points and a fifth substep consists of linking the waypoints to configure a route programmable on an inspection vehicle.

In a third step, the method comprises programming at least an inspection vehicle with the programmable route obtained as a result of the former step. This is the conventional method of transmitting the programmed route to the aircraft's automatic pilot, which can be performed by any known method: connecting the vehicle to the computer where the route has been programmed, utilizing a USB device, or transmitting the program wirelessly by Wi-Fi or Bluetooth connection. The vehicle's automatic pilot will perform the programmed route.

In a fourth step, the method comprises processing the data acquired by the at least one inspection vehicle after having followed the inspection route, to detect structural failures. Preferably, this step in performed with a computer system in the ground, at a point in time ulterior to the data acquisition.

## Claims

1. System for infrastructure inspection comprising means to generate a digital structural model of a piece of infrastructure, means to configure an inspection route and at least an inspection vehicle, **characterized in that** the means to configure an inspection route are configured to calculate stopping points for the at least one inspection vehicle in points of the point cloud associated to critical elements of the piece of infrastructure; converting the stopping points in a sequence of spatial positioning points; programming at least one data-acquisition action on each of the at least one inspection vehicle's stopping points and configuring an inspection route by linking the sequence of spatial positioning points.

2. System for infrastructure inspection according to claim 1, **characterized in that** the means to generate a structural model of an infrastructure comprise a LiDAR sensor.

3. System for infrastructure inspection according to claim 1, **characterized in that** the means to generate a structural model of an infrastructure comprise at least a photogrammetric sensor.

4. System for infrastructure inspection according to claim 1, **characterized in that** the at least one inspection vehicle is a multirotor unmanned aircraft vehicle.

5. Method for infrastructure inspection comprising the steps of:
a) Generating a digital structural model of a piece of infrastructure,
b) Configuring an inspection route,
c) Programming the inspection route in at least one inspection vehicle,
d) Processing the data acquired by the at least one inspection vehicle, **characterized in that** step b) comprises the following substeps:
i. Calculating stopping points for the at least one inspection vehicle in points of the point cloud associated to critical elements of the piece of infrastructure.
ii. Converting the stopping points in a sequence of spatial positioning points.
iii. Programming at least one data-acquisition action on each of the at least one inspection vehicle's stopping points.
iv. Configuring an inspection route by linking the sequence of spatial positioning points.

6. Method for infrastructure inspection according to claim 5, **characterized in that** step a) comprises a first substep of scanning the piece of infrastructure, a second substep of generating a point cloud and a third substep of processing the point cloud.

7. Method for infrastructure inspection according to claim 5, **characterized in that** step b) comprises an additional substep of detecting the infrastructure using the point cloud as basis.
